# EUROPEAN PATENT APPLICATION

(11) **EP 3 336 744 A1**
(43) Date of publication of application: **20.06.2018**
(21) Application number: 16205028.0
(22) Date of filing: 19.12.2016
(51) Int. Cl.: G06K 7/14, G06K 7/10

(54) **METHOD AND DEVICE FOR DECODING A GRAPHICAL CODE**

(71) Applicant: Nestec S.A., 1800 Vevey (CH)
(72) Inventor: DECASTEL, Sylvain, 1617 Remaufens (CH); KUNZLE, Bernard, 1027 Lonay (CH)
(74) Representative: Borne, Patrice Daniel

(57) **Abstract**

The present invention relates to a method for decoding a graphical code, for example in the form of a one-or two-dimensional barcode, in particular an interleaved two of five or a quick response code and a corresponding reading device comprising the steps of:
- acquiring, by an optical sensor, a first part of the graphical code, the part being smaller than the whole graphical code;
- checking, in a first checking step, if the acquired part of the graphical code is decodable according to a first graphical code format or standard;
- storing a result of decoding the acquired part of the graphical code, if the step of checking is successful; otherwise, storing the acquired part of the graphical code in a temporary buffer.

## Description

The present invention relates to a method for decoding a graphical code, for example in the form of a one-or two-dimensional barcode, in particular an interleaved two of five (ITF) or a quick response (QR) code and a corresponding reading device.

### Technical Background and Prior Art

EP 1380983 B1 (Barkan et al.) discloses a system for reading optical codes in point of sale installations. The system includes a decode attempt on a 1-D symbol. If additional data is not located, a low-frequency beep is caused, indicating the reading of a 1 D symbol. If 1 D decode fails, a scan attempt of decoding a 2D symbol is made. A control means controls a speaker to produce a first audible sound with a first sound quality when a one-dimensional symbol is read and a second audible sound with a second, different sound quality when a two-dimensional symbol is read.

However, the steps of scanning and decoding 1 D and 2D symbols occur in strict sequence, which requires an overhead in storage space and processing time, which is not acceptable for mobile, embedded scanners.

It is therefore an object of the invention to provide a method for decoding diverse graphical codes, for example in the form of a one-or two-dimensional barcode, in particular an interleaved two of five (ITF) and a quick response (QR) code, which is suitable for an embedded architecture, where the memory available for storing an entire image in a corresponding reader is restricted and wherein the total time for acquisition and decoding is fairly low.

This object is achieved by a method and a device according to the independent claims. Advantageous embodiments are defined by the dependent claims.

In a first aspect of the invention, a method for decoding a graphical code, for example in the form of a one-or two-dimensional barcode, in particular an interleaved two of five (ITF) or a quick response (QR) code, may comprise the steps of acquiring, by an optical sensor, a first part of the graphical code, the part being smaller than the whole graphical code; checking, in a first checking step, if the acquired part of the graphical code is decodable according to a first graphical code format or standard (I25); storing a result of decoding the acquired part of the graphical code, if the step of checking is successful; and storing the acquired part of the graphical code in a temporary buffer, otherwise.

The part of the graphical code may comprise at least one (1) horizontal line of a graphical code. The part of the graphical code comprises at least three (3) lines. The method does not have to acquire all parts of the graphical code.

The method may further comprise the step of checking, in a second checking step, if the parts in the buffer can be decoded according to a second graphical code format (QR). A result of decoding the graphical code that appears most often in the stored results (I25) may be selected. The parts in the buffer may be decoded according to the second graphical code format (QR), if the second checking step is successful. The first part of the graphical code may be processed, while the optical sensor acquires a second part of the graphical code. The acquired first part and the acquired second part of the graphical code may be stored in alternate buffers. The image acquisition may be stopped if a given number acquired lines have been decoded successfully according to the first graphical code format (I25). The acquired part of the graphical code may be processed using data reduction techniques before it is stored in the buffer. The processing may comprise applying a thresholding method to create values of pixels of the acquired part of the graphical code. The thresholding algorithm may be an adaptive thresholding algorithm. Pixels of the acquired part of the graphical code may be converted into either black or white pixels.

The invention further comprises a device for decoding graphical codes, for example in the form of a one-or two-dimensional barcode, in particular an interleaved two of five (ITF) or a quick response (QR) code, comprising an optical sensor, a first buffer for storing an output of the optical sensor, a result buffer for storing results of decoding the graphical code according to a first graphical code format, a temporary buffer for storing parts of the graphical code acquired by the optical sensor and a processor for processing the acquired parts, wherein the device is adapted execute a method according to the invention. The device may comprise an alternate buffered store a second acquired part of the graphical code. The processor is an embedded processor. The device may be a hand-held device.

### Brief Description of the Figures

- Fig. 1: shows a flowchart of a method according to an embodiment of the invention.
- Fig. 2: shows a block diagram of a device according to the embodiment of the invention.

### Detailed Embodiment

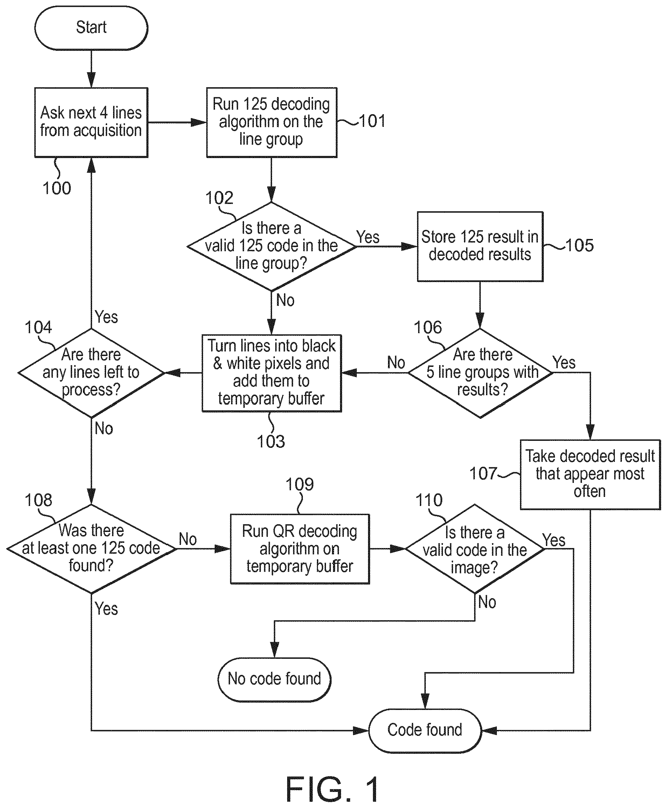

Figure 1 shows a flowchart of a method according to an embodiment of the invention.

An image of the graphical codes is acquired in step 100, not as a whole, but the sensor is controlled to deliver the image in chunks of 4 horizontal lines (top to bottom of the image).

Separating the acquisition into line groups allows controlling the sensor for a part of the acquisition while processing the lines obtained from the previous request. Alternate buffers are used in order to store the data acquired from the sensor into one buffer while processing the content of another buffer.

As an I25 code is a 1D code and is read horizontally, line groups hold sufficient information for the I25 decoding algorithm to detect a valid I25 code. An I25 decoding algorithm is run on the acquired line group in step 101. In step 102, it is checked, whether a valid I25 code has been found.

In order to avoid false positives, the results are stored up to the first five line groups that were decoded successfully are stored in step 105. Out of those, the result that comes out the most often is selected in step 107. This way, the decoding result may be determined with better accuracy in case the image is of poor quality.

In addition, the image acquisition is stopped right after the successful fifth I25 decoding, avoiding a waste of time on unneeded computations.

Each time a line group is treated for an I25 decoding, a thresholding algorithm is applied afterwards over the line group in step 103, in order to convert it from grayscale to black & white pixels and save it aside in a temporary buffer for further use. This conversion allows to save a lot of space, since each grayscale pixel needs a byte (8 bits) to be saved in memory, whereas a black & white pixel can be saved as a single bit (0 for black, 1 for white). An adaptive thresholding algorithm (Wellner, P. D.: Adaptive Thresholding for the DigitalDesk. Technical Report EPC-1993-110, Rank Xerox Ltd. (1993) http://www.xrce.xerox.com/Research-Development/Publications/1993-110) is used that allows getting good results for various light variations.

If no I25 code is detected in the image, then the QR code decoding procedure is run on the bit-map representing the whole sensor acquisition in black and white again in step 103.

In step 108, it is checked whether at least one valid I25 code has been found. If not, a QR decoding algorithm is run on the temporary buffer in step 109. In step 110, it is checked whether a valid code has been found in the image. Depending on the result, the algorithm branches to either the determination, that no code was found or otherwise determines that a code has been found.

The implementation of the solution was achieved by adapting the source code from the ZBar bar code library (The ZBar C library for I25 and QR code decoding: http://zbar.sourceforge.net/). The algorithms for the I25 and QR codes were kept, support for black and white bit-mapped images were added.

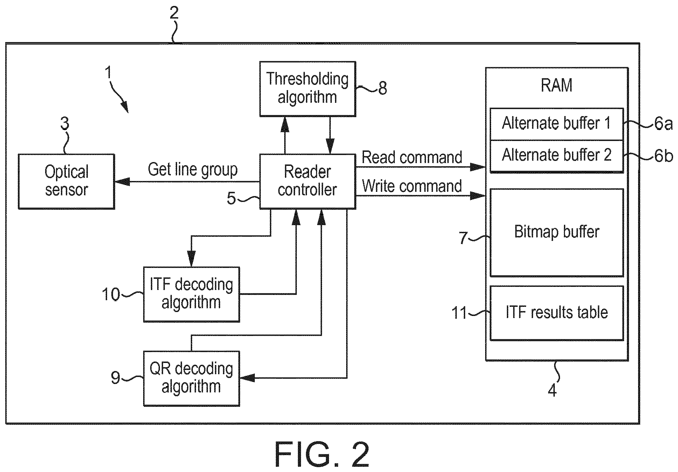

Figure 2 shows a block diagram of a device according to the embodiment of the invention.

The reader component 2 applies the following decoding procedure 1 on a grayscale image acquired by its optical sensor 3 in order to find an Interleaved Two-to-Five (ITF or I25) barcode in the image or a Quick Response (QR) code if no ITF barcode was found in the first place. The procedure will output the content of the barcode found (ITF or QR), or state if no barcode was found in the acquired image.

As a complete grayscale image from the sensor 3 will use too much space if stored on the reader Random Access Memory (RAM) 4, the acquisition is requested by the reader controller 5 from the sensor 3 in chunks of 4 horizontal lines as needed, advancing from top to bottom of the whole acquired image.

A couple of memory buffers, referred to as Alternate Buffers 6a/6b, are defined into the RAM 4. Each buffer 6a/6b spans enough space to store a complete line group taken from the grayscale image.

Each time the controller 5 requests a line group from the sensor 3, it stores this line group into an available alternate buffer 6a/6b, as the other alternate buffer 6a/6b access may be locked due to processing by the decoding procedure 1. This method speeds up the decoding procedure 1 as the controller 5 can ask the sensor 3 for a line group while processing a different line group he got from a preceding request.

The RAM 4 holds also a Bitmap Buffer 7 that spans 1/8 of the whole acquired grayscale image. Processed line groups are converted from grayscale to black and white when needed using a Thresholding algorithm 8. In case the whole acquired image needs to be stored in RAM 4 for processing by the QR decoding algorithm 9, this method allows to save a lot of space, since each grayscale pixel needs a byte (8 bits) to be saved in RAM 4, whereas a black & white pixel can be saved as a single bit (0 for black, 1 for white). Adaptive thresholding 8 is used in order to provide good conversion results for various light variations.

The decoding procedure 1 starts with the controller 5 asking the sensor 3 for a line group.

If a line group is available, the controller 5 stores the requested line group into an available alternate buffer 6a/6b. The controller 5 then locks the buffer 6a/6b that was just updated for processing. If the other alternate buffer 6a/6b is not locked, the controller 5 requests the next line group that will be stored into the other buffer 6a/6b. The controller 5 then runs the ITF decoding algorithm 10 on the line group stored in the buffer 6a/6b he just locked. As an ITF code is a one-dimensional (1 D) code and is read horizontally, line groups hold sufficient information for the ITF decoding algorithm 10 to detect a valid ITF code.

If the ITF decoding algorithm 10 finds a valid ITF code in the processed line group, the controller 5 stores the result of the ITF decoding algorithm into the ITF result table 11 located into the RAM 4. Up to 5 results can be stored into this table 11. If the table 11 is filled with 5 valid results, the controller 5 picks the result that comes out the most often, returns the result and ends. This allows determining the decoding result with better accuracy in case the sensor 3 acquisition is of poor quality. Also, ending the procedure 1 here saves wasting time on unneeded computations.

If the ITF decoding algorithm 10 doesn't find a valid ITF code in the processed line group or if the ITF results table 11 does not contain 5 valid results, the controller 5 runs the thresholding algorithm 8 on the processed line group and stores the conversion result into the bitmap buffer 7.

If there are more line groups to get from the sensor 3, the controller 5 unlocks the alternate buffer 6a/6b he just processed and sends a request for the next line group to the sensor 3. The requested line group will fill this buffer 6a/6b.

If a line group is available into the other alternate buffer 6a/6b, the controller 5 locks this buffer 6a/6b and repeats the ITF decoding algorithm 10 as mentioned above.

If there are no more line groups available for decoding or no more line groups available from the sensor 3, the controller 5 runs the QR decoding algorithm 9 on the bitmap buffer 7. The QR decoding algorithm 9 returns the result if a QR code was found or returns no result otherwise.

## Claims

1. Method for decoding a graphical code, for example in the form of a one-or two-dimensional barcode, in particular an interleaved two of five (ITF) or a quick response (QR) code, comprising the steps of:
- acquiring, by an optical sensor, a first part of the graphical code, the part being smaller than the whole graphical code;
- checking, in a first checking step, if the acquired part of the graphical code is decodable according to a first graphical code format or standard (I25);
- storing a result of decoding the acquired part of the graphical code, if the step of checking is successful; otherwise storing the acquired part of the graphical code in a temporary buffer.

2. The method of claim 1, wherein the part of the graphical code comprises at least one (1) horizontal line of a graphical code.

3. The method of claim 2, wherein the part of the graphical code comprises at least three (3) lines.

4. The method of one of claims 1, 2 or 3, wherein all parts of the graphical code are acquired.

5. The method of claim 4, further comprising the step of checking, in a second checking step, if the parts in the buffer can be decoded according to a second graphical code format (QR).

6. The method of claim 3, further comprising the step of selecting a final result of decoding the graphical code that appears most often in the stored results (I25).

7. The method of claim 5, further comprising the steps of decoding the parts in the buffer according to the second graphical code format (QR), if the second checking step is successful.

8. The method of claim 1, wherein the first part of the graphical code is processed, while the optical sensor acquires a second part of the graphical code.

9. The method of claim 1, wherein the acquired first part and an acquired second part of the graphical code are stored in alternate buffers (6a, 6b).

10. The method of claim 3, wherein the image acquisition is stopped if a given number acquired lines have been decoded successfully according to the first graphical code format (I25).

11. The method of claim 1, wherein the acquired part of the graphical code is processed using data reduction techniques before it is stored in the buffer.

12. The method of claim 11, wherein the processing comprises applying a thresholding method to create values of pixels of the acquired part of the graphical code.

13. The method of claim 12, wherein the thresholding algorithm is an adaptive thresholding algorithm.

14. The method of claim 12, wherein pixels of the acquired part of the graphical code are converted into either black or white pixels.

15. Device for decoding graphical codes, for example in the form of a one-or two-dimensional barcode, in particular an interleaved two of five (ITF) or a quick response (QR) code, comprising an optical sensor (3) for acquiring parts of the graphical code, a first buffer (6a) for storing an output of the optical sensor (3), a processor (5, 10, 9) for processing the acquired parts, a result buffer (11) for storing results of decoding the graphical code according to a first graphical code format and a bitmap buffer (7) for storing parts of the graphical code acquired by the optical sensor,
wherein the device is adapted execute a method according to claim 1.

16. The device of claim 15, further comprising an alternate buffer (6b) to store a second acquired part of the graphical code.

17. The device of claim 15 or 16, wherein the processor is an embedded processor.

18. The device of claim 15, 16 or 17, wherein the device is a hand-held device.
